## Europäisches Patentamt

## European Patent Office

## Office européen des brevets

(19)

(11) Veröffentlichungsnummer : **0 014 320**
**B1**

(12) **EUROPÄISCHE PATENTSCHRIFT**

(45) Veröffentlichungstag der Patentschrift :
**24.02.82**

(21) Anmeldenummer : **80100080.3**

(22) Anmeldetag : **08.01.80**

(51) Int. Cl.³ : **F 16 D 65/58**

(54) **Nachstellvorrichtung für eine Teilbelag-Scheibenbremse.**

(30) Priorität : **25.01.79 DE 2902796**

(43) Veröffentlichungstag der Anmeldung :
**20.08.80 (Patentblatt 80/17)**

(45) Bekanntmachung des Hinweises auf die Patenterteilung : **24.02.82 Patentblatt 82/08**

(84) Benannte Vertragsstaaten :
**FR GB IT NL SE**

(56) Entgegenhaltungen :
**DE - A1 - 2 448 787**
**DE - A1 - 2 741 093**
**DE - B - 1 164 854**
**DE - B - 1 475 501**
**DE - B - 1 080 874**
**DE - B2 - 1 675 155**

(73) Patentinhaber : **Bergische Achsenfabrik Fr. Kotz & Söhne**
**Am Ohlerhammer**
**D-5276 Wiehl 1 (DE)**

(72) Erfinder : **Brandt, Heinrich**
**Wülfringhausener Strasse 2**
**D-5276 Wiehl (DE)**

(74) Vertreter : **Stenger, Alex, Dipl.-Ing. et al**
**Patentanwälte Dipl.-Ing. A. Stenger Dipl.-Ing. W. Watzke, Dipl.-Ing. H.J. Ring Kaiser-Friedrich-Ring 70**
**D-4000 Düsseldorf 11 (DE)**

Imprimerie Jouve, 18, rue St-Denis, 75001 Paris, France

## Nachstellvorrichtung für eine Teilbelag-Scheibenbremse

Die Erfindung betrifft eine Nachstellvorrichtung für eine Teilbelag-Scheibenbremse für Kraftfahrzeuge oder Anhänger, deren Bremsbacken am Achskörper angelenkt und beiderseits einer Bremsscheibe auf Zugstangen angeordnet sind, die mit je einem um eine parallel zur äußeren Bremsbacke verlaufenden Achse verschwenkbaren Bremshebel zusammenwirken, der einen Nocken zum Betätigen der äußeren Bremsbacke besitzt.

Aus der DE-A 2 448 787 ist eine Teilbelag-Scheibenbremse bekannt, bei der die Bremshebel mit einem Innengewinde versehen und auf den mit einem Außengewinde versehenen Zugstangen angeordnet sind. Bei dieser bekannten Teilbelag-Scheibenbremse kann jeder Bremshebel mit einer aus einer Schnecke und einem Schneckenrad bestehenden Nachstellvorrichtung ausgestattet sein, die aber den Bremsbelagverschleiß nicht automatisch ausgleicht, sondern von Hand nachgestellt werden muß.

Weiterhin ist aus der DE-B 1 164 854 eine Teilbelag-Scheibenbremse mit zangenartig angelenkten Bremsbacken bekannt, die außerhalb der Bremsscheibe mit einer Betätigungsstange gegeneinander verspannt werden können, die aus zwei durch ein Gewinde verbundenen Teilen besteht, um ein Nachstellen zum Ausgleich der Abnutzung der Bremsbeläge zu ermöglichen. Der Ausgleich des Bremsbelagverschleisses kann in diesem Fall aber nur von Hand erfolgen.

Schließlich ist aus der DE-B 10 80 874 eine Scheibenbremse bekannt, bei der die Bremsbacken mit einer Hebeleinrichtung betätigt werden, die ein einstellbares Glied in Form einer Nachstellschraube besitzt, um den Bremsbelagverschleiß ausgleichen zu können. Mit dem äußeren Ende der Nachstellschraube ist eine vorgespannte Spiralfeder verbunden, um den Bremsbelagverschleiß automatisch auszugleichen. Diese bekannte Scheibenbremse besitzt jedoch ein Betätigungssystem für die Bremsbacken, welches von dem der eingangsbeschriebenen Gattung abweicht.

Davon ausgehend liegt der Erfindung die Aufgabe zugrunde, eine automatische Nachstellvorrichtung für eine Teilbelag-Scheibenbremse mit einem Betätigungssystem der eingangs beschriebenen Gattung zu schaffen, die den Bremsbelagverschleiß bei einstellbarem Lüftspiel ebenfalls stufenlos ausgleicht und einen einfachen konstruktiven Aufbau besitzt.

Diese Aufgabe wird dadurch gelöst, daß zwischen dem Nocken jedes Bremshebels und der äußeren Bremsbacke axial verstellbare Nachstellbolzen und drehbare Nachstellkörper angeordnet sind, die über Schrägflächen zusammenwirken, daß zwischen jedem Nachstellkörper und der äußeren Bremsbacke eine vorgespannte Spiralfeder angeordnet ist, deren Enden am Nachstellkörper bzw. an der äußeren Bremsbacke befestigt sind, und daß die Ausgangslage zwischen den Nachstellbolzen und den Nachstellkörpern mit einem zwischen den Bremsbacken angeordneten und den Bremshebeln anliegenden, axial verstellbaren Bolzen einstellbar ist.

Bei einer raumsparenden Ausführungsform dieser Nachstellvorrichtung können der Nachstellbolzen, der Nachstellkörper und die Spiralfeder in einer Bohrung der äußeren Bremsbacke angeordnet sein, die mit einem Deckel abgedeckt ist. Außerdem wird die Spiralfeder zweckmäßig in einer Ausnehmung im Boden des Nachstellkörpers angeordnet, in die ein an der äußeren Bremsbacke befestigter Befestigungsbolzen hineinragt.

Eine erfindungsgemäß ausgebildete Nachstellvorrichtung hat den Vorteil, daß sie eine stufenlos arbeitende, automatische Nachstellung zum Ausgleich des Bremsbelagverschleißes besitzt, wobei gleichzeitig ein konstantes Lüftspiel einstellbar ist. Ein weiterer Vorteil besteht in der konstruktiv einfachen und dadurch wartungsfreundlichen Konstruktion der Nachstellvorrichtung.

Eine bevorzugtes Ausführungsform einer erfindungsgemäß ausgebildeten Nachstellvorrichtung für eine Teilbelag-Scheibenbremse wird nachfolgend anhand der zugehörigen Zeichnungen beschrieben. In den Zeichnungen zeigen:

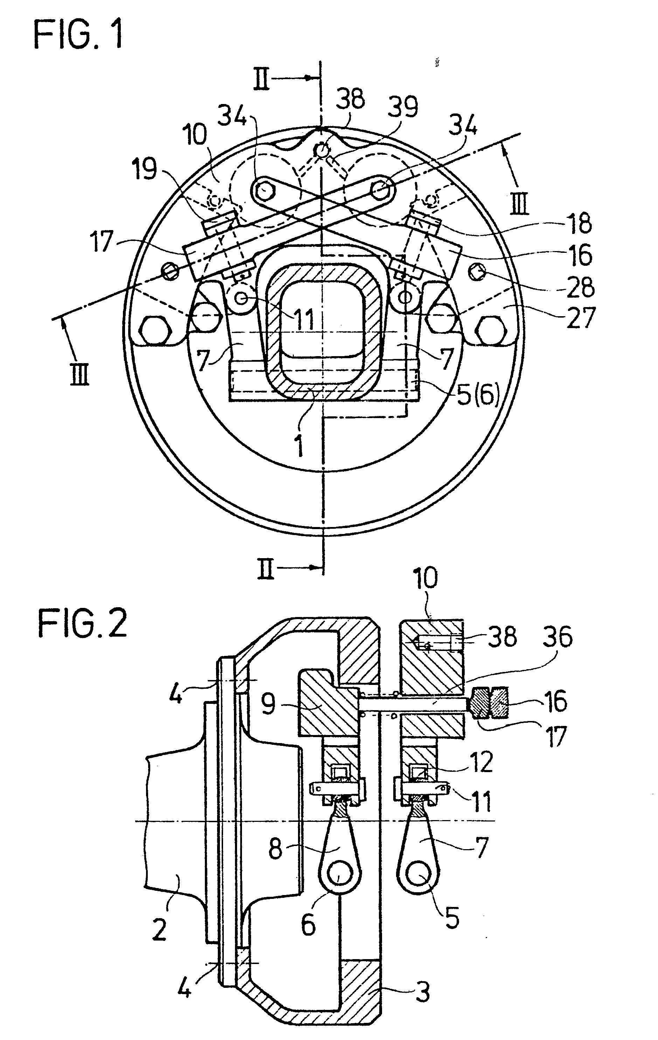

Fig. 1 eine Teilbelag-Scheibenbremse in Ansicht;

Fig. 2 dieselbe Teilbelag-Scheibenbremse entlang der Linie II-II in Figur 1 geschnitten in Seitenansicht;

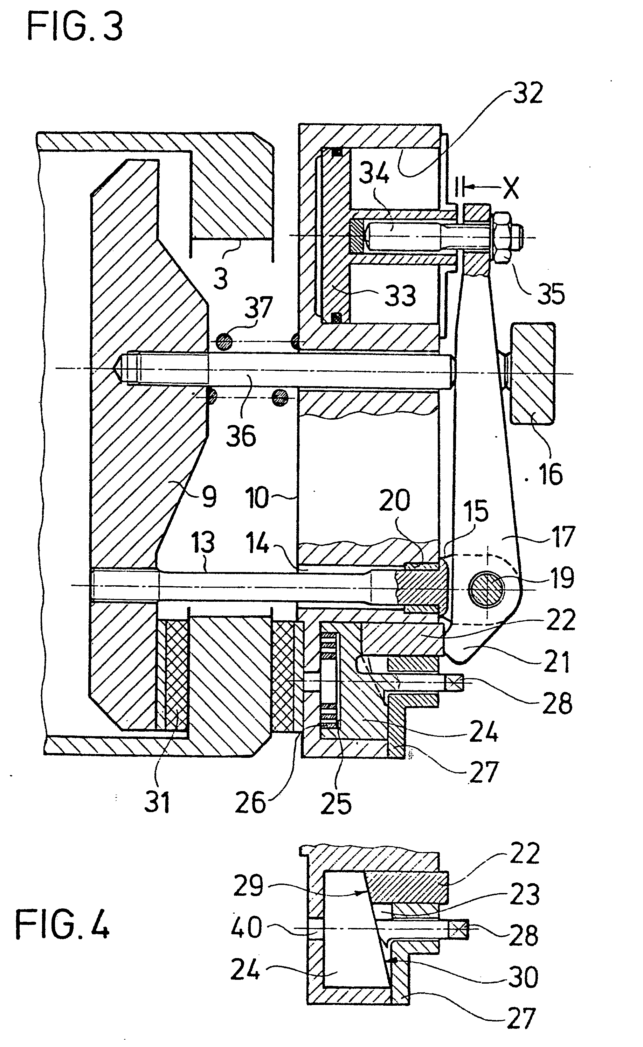

Fig. 3 einen Ausschnitt derselben Teilbelag-Scheibenbremse entlang der Linie III-III in Figur 1 geschnitten in vergrößerter Darstellung;

Fig. 4 einen Ausschnitt aus Figur 3 zur Veranschaulichung der Schrägflächen in der Nachstellvorrichtung.

An einem Achskörper 1 ist eine Radnabe 2 gelagert, an der eine trommelförmige Bremsscheibe 3 mit Schrauben 4 befestigt ist. Die Radnabe 2 ist in bekannter Weise am Achskörper 1 gelagert, so daß auf die Darstellung der Lagerung verzichtet werden kann.

Die Nachstellvorrichtung für die dargestellte Teilbelag-Scheibenbremse besteht aus zwei symmetrischen Anordnungen, welche gemeinsam die Bremswirkung erzeugen, so daß die nachstehende Beschreibung einer Anordnung zum Verständnis der Erfindung ausreicht.

In oder am Achskörper 1 sind im Abstand voneinander beiderseits der Symmetrieebene der Teilbelag-Scheibenbremse Lagerbolzen 5 und 6 befestigt, auf denen beiderseits des Achskörpers parallel zu diesem verschwenkbare Halter 7 und 8 für eine innere Bremsbacke 9 und eine äußere Bremsbacke 10 gelagert. Die Verbindungen zwischen den Haltern 7 und 8 und den Bremsbacken 9 und 10 sind mittels Bolzen 11 und balliger Lagerbuchsen 12 in engen Grenzen beweglich ausgebildet, so daß die Bremsbacken 9 und 10 parallel zur Bremsscheibe 3 verschoben werden können.

In der inneren Bremsbacke 9 sind zwei Zugstangen 13 befestigt, welche Bohrungen 14 in der äußeren Bremsbacke 10 durchdringen und an der Außenseite einen Gabelkopf 15 besitzen, in dem je ein Bremshebel 16 bzw. 17 um eine Achse 18 bzw. 19 schwenkbar gelagert ist. Die äußere Bremsbacke 10 ist mit einer Buchse 20 auf dem Schaft der Zugstange 13 gelagert.

Jeder Bremshebel 16 und 17 besitzt an seinem freien kurzen Hebelarm einen Nocken 21, der einem axial beweglich gelagerten Nachstellbolzen 22 anliegt, der in ein von der äußeren Bremsbacke 10 gebildetes Gehäuse 23 eingreift. Unter dem Nachstellbolzen 22 ist in dem Gehäuse ein Nachstellkörper 24 drehbar angeordnet, der in seinem Boden eine Ausnehmung 25 für eine Spiralfeder 26 besitzt. Das Gehäuse ist mit einem Deckel 27 abgedeckt, aus dem ein Vierkant 28 des Nachstellkörpers 24 herausragt.

Der Nachstellbolzen 22 und der Nachstellkörper 24 wirken über Schrägflächen 29 und 30 zusammen, um den Verschleiß von an den Bremsbacken 9 und 10 befestigten Bremsbelägen 31 auszugleichen.

Zur Betätigung jedes Bremshebels 16 und 17 dient ein in der äußeren Bremsbacke 10 angeordneter Zylinder 32 mit einem darin angeordneten Kolben 33, der mittels eines längenveränderlichen Bolzens 34 den Bremshebel 17 beaufschlagt. Die Längenveränderung des Bolzens 34 erfolgt mit einer Einstellschraube 35. Zwischen dem Betätigungsende des Bremshebels 17 und des Kolbens 33 ist ein Spalt x vorhanden, der mittels der Einstellschraube 35 vergrößert oder verkleinert werden kann. Das Lüftspiel der Bremse wird durch einen den Bremshebeln 16 und 17 anliegenden Bolzen 36 bestimmt, der in die innere Bremsbacke 9 eingeschraubt ist und die äußere Bremsbacke 10 durchdringt. Auf dem Bolzen 36 ist eine Druckfeder 37 angeordnet, welche das System zur Einstellung des Lüftspieles gegeneinander verspannt.

Eine erfindungsgemäß ausgebildete Nachstellvorrichtung funktioniert folgendermaßen:

Wenn die Kolben 33 durch Einleitung eines Druckmediums über eine Anschlußbohrung 38 und Kanäle 39 in die Zylinder 32 betätigt werden, drücken die Bremshebel 16 und 17 nach Überwindung des Spaltes x mit ihren Nocken 21 über die Nachstellbolzen 22 und die Nachstellkörper 24 die äußere Bremsbacke 10 in Richtung auf die Bremsscheibe 3, wobei gleichzeitig als Reaktionskraft über die Achsen 19 und die Zugstangen 13 die innere Bremsbacke 9 angezogen wird bis die Bremsbeläge 31 der Bremsscheibe 3 anliegen. Bei Entlüftung der Zylinder 32 werden die beiden Bremsbacken 9 und 10 von den Druckfedern 37 wieder auseinandergedrückt, wobei sich die Bremsbeläge 31 von der Bremsscheibe 3 lösen und schließlich um das Lüftspiel x von der Bremsscheibe 3 abheben können.

Bei zunehmendem Verschleiß der Bremsbeläge 31 bildet sich zwischen den Nocken 21 der beiden Bremshebel 16 und 17 einerseits und den Nachstellbolzen 22 ein Spalt, der aber durch Verdrehen des Nachstellkörpers 24 ausgeglichen wird, weil die vorgespannte Spiralfeder 26, welche einerseits am Nachstellkörper 24 und andererseits an einem in das Gehäuse 23 hineinragenden, bremsbackenfesten Bolzen 40 befestigt ist, die ansteigende Schrägfläche 30 des Nachstellkörpers 24 unter der Schrägfläche 29 des Nachstellbolzens 22 hinwegzieht und letzteren nach außen drückt, bis der durch den Verschleiß der Bremsbeläge 31 entstandene Luftspalt ausgeglichen ist.

Wenn die verschlissenen Bremsbeläge 31 ausgetauscht werden, kann der Nachstellkörper 24 am Vierkant 28 wieder in seine Ausgangslage zurückgedreht werden, wobei gleichzeitig die Spiralfeder 26 vorgespannt wird.

Bezugszeichenliste :

|   |   |
|---|---|
| 1 | Achskörper |
| 2 | Radnabe |
| 3 | Bremsscheibe |
| 4 | Schraube |
| 5 | Lagerbolzen |
| 6 | Lagerbolzen |
| 7 | Halter |
| 8 | Halter |
| 9 | Bremsbacke (innere) |
| 10 | Bremsbacke (äußere) |
| 11 | Bolzen |
| 12 | Lagerbuchse |
| 13 | Zugstange |
| 14 | Bohrungen |
| 15 | Gabelkopf |
| 16 | Bremshebel |
| 17 | Bremshebel |
| 18 | Achse |
| 19 | Achse |
| 20 | Buchse |
| 21 | Nocken |
| 22 | Nachstellbolzen |
| 23 | Gehäuse |
| 24 | Nachstellkörper |
| 25 | Ausnehmung |
| 26 | Spiralfeder |
| 27 | Deckel |
| 28 | Vierkant |
| 29 | Schrägfläche |
| 30 | Schrägfläche |
| 31 | Bremsbelag |
| 32 | Zylinder |
| 33 | Kolben |
| 34 | Bolzen |
| 35 | Einstellschraube |
| 36 | Bolzen |
| 37 | Druckfeder |
| 38 | Anschlußbohrung |
| 39 | Kanäle |
| 40 | Bolzen |
| x | Spalt |

**Ansprüche**

1. Nachstellvorrichtung für eine Teilbelag-Scheibenbremse für Kraftfahrzeuge oder Anhänger, deren Bremsbacken (9, 10) am Achskörper (1) angelenkt und beiderseits einer Bremsscheibe (3) auf Zugstangen (13) angeordnet sind, die mit je einem um eine parallel zur äußeren Bremsbacke verlaufenden Achse verschwenkbaren Bremshebel (16, 17) zusammenwirken, der einen Nocken (21) zum Betätigen der äußeren Bremsbacke (10) besitzt, dadurch gekennzeichnet, daß zwischen dem Nocken (21) jedes Bremshebels (16, 17) und der äußeren Bremsbacke (10) axial verstellbare Nachstellbolzen (22) und drehbare Nachstellkörper (24) angeordnet sind, die über Schrägflächen (29, 30) zusammenwirken, daß zwischen jedem Nachstellkörper (24) und der äußeren Bremsbacke (10) eine vorgespannte Spiralfeder (26) angeordnet ist, deren Enden am Nachstellkörper (24) bzw. an der äußeren Bremsbacke (10) befestigt sind und daß die Ausgangslage zwischen den Nachstellbolzen (22) und den Nachstellkörpern (24) mit einem sich an der inneren Bremsbacke (9) abstützenden und an den Bremshebeln (16, 17) anliegenden, axial verstellbaren Bolzen (36) einstellbar ist.

2. Nachstellvorrichtung nach Anspruch 1, dadurch gekennzeichnet, daß die Nachstellbolzen (22), Nachstellkörper (24) und Spiralfedern (26) in Gehäusen (23) der äußeren Bremsbacken (10) angeordnet sind, die mit Deckeln (27) abgedeckt sind.

3. Nachstellvorrichtung· nach den Ansprüchen 1 und 2, dadurch gekennzeichnet, daß jeder Nachstellkörper (24) mit einem Vierkant (28) aus dem Deckel (27) herausragt.

4. Nachstellvorrichtung nach den Ansprüchen 1 bis 3, dadurch gekennzeichnet, daß die Spiralfedern (26) jeweils in einer Ausnehmung (25) im Boden der Nachstellkörper (24) angeordnet sind, in die ein an der äußeren Bremsbacke (10) befestigter Bolzen (40) hineinragt.

5. Nachstellvorrichtung nach den Ansprüchen 1 bis 4, dadurch gekennzeichnet, daß das Lüftspiel der Bremsbacken (16, 17) mittels des Bolzens (36) und die Enden der Bremshebel (16, 17) auf Bolzen (34) nieder-haltender Einstellschrauben (35) bestimmbar ist.

6. Nachstellvorrichtung nach den Ansprüchen 1 bis 5, dadurch gekennzeichnet, daß die beiden Bremshebel (16, 17) sich kreuzen und der Bolzen (36) für die Einstellung des Lüftspieles im Kreuzungspunkt der beiden Bremshebel (16, 17) angeordnet ist.

## Claims

1. Adjustment device for a part-covered disc brake for vehicles or trailers, of which the brake pads (9, 10) are connected to the axle body (1) and are arranged on both sides of a brake disc (3) on draw rods (13), which each co-operate with a respective brake lever (16, 17) pivotal about an axis extending parallel to the outer brake pad, which has a cam (21) for the actuation of the outer brake pad (10), characterised in this that between the cam (21) of each brake lever (16, 17) and the outer brake pad (10) axially-adjustable adjustment pins (22) and rotatable adjustment bodies (24) are provided, which interact at inclined surfaces (29, 30), that between each adjustment body (24) and the outer brake pad (10) a pretensioned spiral spring (26) is located, of which the ends are secured respectively to the adjustment body (24) and to the outer brake pad (10), and that the initial relationship between the adjustment pins (22) and the adjustment bodies (24) is adjustable by an axially displaceable pin (36) supporting the inner brake pad (9) and applied against the brake lever (16, 17).

2. Adjustment device according to claim 1, characterised in this that the adjustment pins (22), adjustment body (24) and spiral springs (26) are arranged in housing (23) of the outer brake pads (10) which are enclosed by covers (27).

3. Adjustment device according to claims 1 and 2, characterised in this that each adjustment body (24) projects with a four-edged member (28) out of the cover (27).

4. Adjustment device according to claims 1 to 3, characterised in this that the spiral springs (26) are mounted respectively in a recess (25) in the bottom of the adjustment body (24), into which a pin (40) projects which is secured to the outer brake pad (10).

5. Adjustment device according to claims 1 to 4, characterised in this that the air gap of the brake pads (10) is adaptable by means of the pin (36) and the ends of the brake lever (16, 17) are adaptable on pins (34) by adjustable lock nuts (35).

6. Adjustment device according to claims 1 to 5, characterised in this that both brake levers (16, 17) cross one another and the pin (36) for the adjustment of the air gap is mounted at the crossover point of the two brake levers (16, 17).

## Revendications

1. Dispositif de rattrapage pour un frein à disque à garniture partielle pour véhicules automobiles ou remorques, dont les mâchoires de frein (9, 10) sont articulées sur le corps d'essieu (1) et disposées, des deux côtés d'un disque de frein (3), sur des tiges de traction (13) qui coopèrent chacune avec un levier de frein (10, 17) qui peut pivoter autour d'un axe s'étendant parallèlement à la mâchoire de frein extérieure, levier qui comporte une saillie (21) pour actionner la mâchoire de frein extérieure (10), caractérisé en ce qu'entre la saillie (21) de chaque levier de frein (16, 17) et la mâchoire de frein extérieure (10) sont disposés des corps de rattrapage rotatifs (24) et des tiges de rattrapage (22) réglables axialement, qui coopèrent par l'intermédiaire de surfaces inclinées (29, 30), en ce qu'entre chaque corps de rattrapage (24) et la mâchoire de frein extérieure (10), est disposé un ressort spirale précontraint (26) dont les extrémités sont fixées sur le corps de rattrapage (24) ainsi que sur la mâchoire de frein extérieure (10), et en ce que la position initiale entre les tiges de rattrapage (22) et les corps de rattrapage (24) est réglable au moyen d'une tige (36) déplaçable axialement, s'appuyant sur la mâchoire de frein intérieure (9) et en contact sur les leviers de frein (16, 17).

2. Dispositif de rattrapage selon la revendication 1, caractérisé en ce que les tiges de rattrapage (22), les corps de rattrapage (24) et les ressorts spirales (26) sont disposés dans des boîtiers (23) des mâchoires de frein extérieures (10), qui sont recouverts par des couvercles (27).

3. Dispositif de rattrapage selon les revendications 1 et 2, caractérisé en ce que chaque corps de rattrapage (24) fait saillie hors du couvercle (27) par un quatre-pans (18).

4. Dispositif de rattrapage selon les revendications 1 à 3, caractérisé en ce que les ressorts spirales (26) sont chacun disposés dans un logement (25) dans le fond des corps de rattrapage (24), dans lequel pénètre une tige (40) fixée sur la mâchoire de frein extérieure (10).

5. Dispositif de rattrapage selon les revendications 1 à 4, caractérisé en ce que l'entrefer des mâchoires de frein (16, 17) peut être déterminé au moyen de la tige (36) et de vis de réglage (35) pressant les extrémités des leviers de frein (16, 17) sur des tiges (34).

6. Dispositif de rattrapage selon les revendications 1 à 5, caractérisé en ce que les deux leviers de frein (16, 17) se croisent et la tige (36) pour le réglage de l'entrefer est disposée au point de croisement des deux leviers de frein (16, 17).

0 014 320

**FIG. 1**

**FIG. 2**

1

FIG.3

FIG.4